# EUROPÄISCHE PATENTSCHRIFT

(11) **EP 0 500 573 B1**
(45) Veröffentlichungstag und Bekanntmachung des Hinweises auf die Patenterteilung: **06.07.1994**
(21) Anmeldenummer: 90915706.7
(22) Anmeldetag: 30.10.1990
(51) Int. Cl.: A21C 9/00, A21C 3/06

(54) **VERFAHREN ZUM FALTEN VON TEIGBLÄTTERN, SOWIE VORRICHTUNG ZUR DURCHFÜHRUNG DIESES VERFAHRENS**
PROCESS FOR FOLDING SHEETS OF DOUGH AND DEVICE FOR IMPLEMENTING IT
PROCEDE DE PLIAGE D'ABAISSES DE PATE ET DISPOSITIF POUR LA MISE EN UVRE DE CE PROCEDE

(30) Priorität: 30.10.1989 AT 2493/89
(43) Veröffentlichungstag der Anmeldung: 02.09.1992
(73) Patentinhaber: "EMO-MARIETTA"-NÄHRMITTEL-PRODUKTIONS- UND VERTRIEBS-GESELLSCHAFT M.B.H., A-1201 Wien (AT)
(72) Erfinder: DIEM, Eckehard, A-1140 Wien (AT); GANSTER, Helmut, A-1210 Wien (AT); WINTER, Alfred, A-1140 Wien (AT); GIOKAS, Stefan, A-1160 Wien (AT); WALTER, Edgar, A-1200 Wien (AT)
(74) Vertreter: Haffner, Thomas M., Dr.
(86) Internationale Anmeldenummer: AT9000106
(87) Internationale Veröffentlichungsnummer: WO9106218

(56) Entgegenhaltungen:
- EP-A- 89 753
- DE-A- 2 709 544
- FR-A- 251 928
- US-A- 4 084 493
- US-A- 4 520 035

## Beschreibung

Die Erfindung bezieht sich auf ein Verfahren zum Falten von im wesentlichen rechteckigen Teigblättern, wobei wenigstens ein Teigblatt in wenigstens zwei aufeinanderfolgenden Faltvorgängen um zueinander parallele Faltlinien gegensinnig einwärts gefaltet wird, wobei die zur Faltlinie parallelen freien Kanten des Teigblattes innerhalb der Projektion des gefalteten Teigblattes zu liegen kommen, wobei das einwärts gefaltete Teigblatt um quer zu den parallelen Faltlinien verlaufende Linien an den Enden eingeschlagen wird, sowie auf eine Vorrichtung zur Durchführung dieses Verfahrens.

Aus der DE-OS 2 439 496 ist eine Maschine zum Querfalten von Teigbandabschnitten bekannt geworden, wobei ein Teigbandabschnitt zur Herstellung von Blätterteig über eine Mehrzahl von mit angetriebenen Förderbändern ausgestatteten Fördertischen bewegt wird, wobei für eine Faltung des zugeführten Teigbandabschnittes die Förderbänder mit reversierbarem Antrieb ausgebildet sind und teilweise zueinander geneigt verlaufen. Durch Umschaltung des Förderbandantriebes und Variation des Abstandes der Umlenkrollen einzelner Förderbänder wird eine Faltung des Teigbandabschnittes um zueinander im wesentlichen parallele Faltlinien vorgenommen. Nach einer derartigen Faltung des Teigbandabschnittes wird das Faltpaket wiederum ausgewalzt und der Faltvorgang wiederholt, da zur Herstellung von Blätterteig ein mehrfaches Tourieren und nachfolgendes Auswalzen erforderlich ist. Der DE-PS 38 44 441 ist eine weitere Vorrichtung zum Verarbeiten eines aus zwei Teigschichten und einer dazwischenliegenden Fettschicht bestehenden Teiges für Blätterteig und Plundergebäck zu entnehmen, wobei wieder ein Teigbandabschnitt um zwei im wesentlichen parallel verlaufende Faltlinien gefaltet wird und nachfolgend wiederum ein Walzvorgang stattfindet. Der DE-OS 27 54 147 ist eine Vorrichtung zum Ofenfertigmachen von Teigstücken bekannt geworden, wobei ein ausgewalztes Teigstück um zwei im wesentlichen parallel zueinander verlaufende Faltlinien gefaltet wird und anschließend über eine Vielzahl von zueinander orthogonal stehenden Förderbändern einem Ofen zugeführt wird. Eine ähnliche Einrichtung zur Faltung von Teig im Rahmen einer Teigformmaschine ist auch der DE-OS 19 06 683 entnehmbar.

Aus der US-PS 4 520 035 ist ein Verfahren der eingangs genannten Art zur Verpackung von kreisrunden Pizzaböden bekannt geworden, wobei eine mit vorgefertigten Faltlinien ausgebildete Verpackungsfolie auf den kreisrunden Teig aufgelegt wird und der Teig jeweils um zueinander parallel verlaufende und aufeinander orthogonal stehende Paare von Faltlinien auf eine für eine Verpackung geeignete Größe gefaltet wird. Aus der US-A-40 84 493 ist ebenfalls ein Verfahren sowie eine Vorrichtung zum Falten und Verpacken von kreisrunden Teigblättern mit einer Fülle bekanntgeworden, wobei in einer ersten Faltstation Faltklappen ein.erstes Einschlagen des Teigblattes durchführen, worauf anschließend im wesentlichen quer zur Förderrichtung über schwenkbare Klappen ein weiteres, mehrfaches Einschlagen des Teigblattes erfolgt.

Nachteilig bei diesen Verfahren ist die Tatsache, daß aufgrund des kreisrunden Ausgangsmaterials durch die mehrfache Faltung Bereiche unterschiedlicher Dicke dadurch entstehen, daß eine unterschiedliche Anzahl von einander überlappenden Teigbahnen zustande kommt.

Teigblätter der eingangs genannten Art weisen eine durch Walzen, Ziehen od.dgl. erzielbare geringe Dicke auf und können beispielsweise aus Strudelteig, Blätterteig oder ähnlichen, zu dünnen Teigblattern verarbeitbaren Teigsorten bestehen. Insbesondere Strudelteigblätter wurden neben der konventionellen Verfahrensweise, gemäß welcher derartige Blätter durch händisches Ziehen hergestellt wurden, bereits mit Teigziehmaschinen hergestellt. Derartige Teigziehmaschinen zur Herstellung von Strudelteigbahnen üben auf eine Bahn quer zur Förderrichtung der Teigbahn gerichtete Zugkräfte aus, und es sind an den seitlichen Rändern der Teigbahnen Haltevorrichtungen vorgesehen, welche die Teigbahn klemmen und auch während des weitgehenden Trocknens auf der gezogenen Breite halten. Erst nach Erreichen bestimmter Feuchtigkeitsgehalte besteht in der Folge keine Gefahr mehr, daß die Teigbahn nach Aufhebung der Klemmwirkung an den Rändern der Teigbahn neuerlich kontrahiert. Derartige gezogene Teigbahnen wurden in der Folge mit Schneidvorrichtungen auf das gewünschte Format des einzelnen Teigblattes geschnitten und nach einem Vereinzeln der auf diese Weise 5 geschnittenen Teigbahnen mußte das Falten zur Erzielung eines verpackungsfähigen Produktes bisher händisch durchgeführt werden. Die Restfeuchte der Teigbahn ist für die Lagerfähigkeit von wesentlicher Bedeutung, und die maschinell gezogenen Teigbahnen mußten durch das Trocknen auf einen engen Bereich der zulässigen Feuchtigkeit gebracht werden, da bei zu geringer Feuchtigkeit ein Falten ohne Brüchigwerden des Teiges und dadurch entstehende Risse nicht ohne weiteres möglich war und bei zu hoher Feuchtigkeit die Lagerfähigkeit deutlich abnahm. Unter Einhaltung von Feuchtigkeitsgehalten, welche üblicherweise zwischen 15 und 25 Gew.-% lagen, war es in der Vergangenheit möglich, ein Produkt durch händisches Falten so zu falten, daß auch in der Folge beim Lagern die Feuchtigkeitsabgabe aus dem Produkt, welche beim Entfalten des Produktes zu Rissen führen könnte, möglichst gering gehalten werden konnte. Die bekannten Faltmaßnahmen sahen dabei vor, daß alle freiliegenden Ränder durch mehrfach gegensinnige Faltvorgänge einwärts geschlagen werden, um eine übermäßige Feuchtigkeitsabgabe über derartige Randstellen des gefalteten Teigblattes so gering wie nur möglich zu halten. Die bisher angewandten Faltverfahren eigneten sich aber durchwegs nicht für eine einfache maschinelle Faltung, und die Vorgangsweise zum händischen Falten gestaltete sich daher zeitaufwendig und kostenintensiv.

Die Erfindung zielt nun darauf ab, ein Verfahren der eingangs genannten Art zu schaffen, welches sich in besonders einfacher Weise für ein maschinelles Falten eignet und mit welchem gleichzeitig sichergestellt ist, daß an den Rändern des gefalteten Produktes keine Kanten der ursprünglichen Teigbahn zu liegen kommen. Insbesondere die Vermeidung derartiger Kanten an den Rändern des gefalteten Produktes führt in der Folge zu einer wesentlich verbesserten Lagerfähigkeit und einem deutlich verringerten Feuchtigkeitsverlust, welcher zur Brüchigkeit des Teiges führen könnte. Zur Lösung dieser Aufgabe besteht besteht das erfindungsgemäße Verfahren im wesentlichen darin, daß das gefaltete Teigblatt ausgehend vom in Richtung der zueinander parallelen Faltlinien dem ersten Ende gegenüberliegenden, anderen Ende des gefalteten Teigblattes entgegen der Richtung des ersten Einschlages wenigstens zweimal so eingeschlagen wird, daß eine Faltkante des wenigstens zweifach eingeschlagenen Produktes über dem eingeschlagenen, ersten Ende zu liegen. kommt. Da zunächst um zueinander parallele Faltlinien gegensinnig einwärts gefaltet wird, wird eine Verfahrensweise gewählt, welche sich ohne großen konstruktiven Aufwand auch maschinell verwirklichen läßt. Durch die Faltung um zueinander parallele Faltlinien gegensinnig einwärts soll hiebei sichergestellt werden, daß die zur Faltlinie parallelen, freien Kanten des Teigblattes innerhalb der Projektion des gefalteten Teigblattes zu liegen kommen, wodurch die seitliche Begrenzung des gefalteten Produktes nunmehr von Faltkanten, nicht aber von freiliegenden Kanten des ursprünglichen Teigblattes gebildet werden. Für diesen Faltvorgang ist es unerheblich, ob ein Einzelblatt gefaltet wird oder ob, wie es einer bevorzugten Weiterbildung entspricht, gleichzeitig zwei oder mehr übereinanderliegende Teigblätter einer derartigen ersten Faltung unterworfen werden. In allen Fällen gelangen nämlich die freien Kanten des oder der Teigblätter in einen Bereich innerhalb der Umrißkontur des gefalteten Produktes bzw. Teigblattstapels. Dadurch, daß das einwärts gefaltete Teigblatt bzw. der gefaltete Teigblattstapel um eine quer zu den parallelen Faltlinien verlaufende Linie an einem ersten Ende eingeschlagen wird, wird nun auch an einer Querseite des Faltproduktes sichergestellt, daß freiliegende Kanten der ursprünglichen Teigblätter nicht außen zu liegen kommen, sondern innerhalb der Umrißkontur des Faltproduktes liegen. Dadurch, daß nun an dem gegenüberliegenden freien Ende des Faltproduktes dieses gegensinnig wenigstens zweimal so eingeschlagen wird, daß eine Faltkante des wenigstens zweifach eingeschlagenen Produktes über dem eingeschlagenen, ersten Ende zu liegen kommt, ergibt sich insgesamt ein Produkt, bei welchem die Sichtkanten durchwegs von Faltkanten gebildet sind und für welches nur eine relativ geringe Anzahl aufeinanderfolgender Faltvorgänge erforderlich ist, wodurch sich ein derartiges Verfahren besonders für das maschinelle Falten von Teigblättern eignet.

Mit Vorteil wird das erfindungsgemäße Verfahren so durchgeführt, daß das Teigblatt um zwei zueinander parallele Faltlinien zum mittleren Abschnitt hin gegensinnig gefaltet wird, wodurch mit einer besonders einfachen Faltvorrichtung das Auslangen gefunden werden kann: Der überaus einfache Verfahrensablauf läßt hiebei hohe Ausstoßgeschwindigkeiten bei maschineller Fertigung ohne Beeinträchtigung zu, da immerhin berücksichtigt werden muß, daß das zu faltende Teigblatt bzw. der Stapel von Teigblättern durchwegs aus überaus dünnem und leicht verformbaren Material besteht.

Gemäß einer bevorzugten Weiterbildung des erfindungsgemäßen Verfahrens wird so vorgegangen, daß die zueinander parallelen Faltlinien in einem Abstand voneinander liegen, welcher größer oder gleich dem Abstand der Faltlinien von den zur Faltlinie parallelen freien Kanten des Teigblattes ist. Auf diese Weise wird mit zwei aufeinanderfolgenden Faltvorgängen, bei welchem im wesentlichen jeweils etwa ein Drittel der ursprünglichen Breite des Teigblattes umgeschlagen wird, sichergestellt, daß der zuletzt gefaltete Lappen in Abstand von der gegenüberliegenden, bereits gefalteten Kante innerhalb der Umrißkontur des Faltproduktes zu liegen kommt.

Das mehrfache Einschlagen des dem ersten, eingeschlagenen Ende gegenüberliegenden Endes der Teigbahn ermöglicht es, ein relativ kleines Endprodukt zu erzielen, wobei für einen derartigen mehrfachen Einschlagvorgang am Ende des Faltverfahrens die Vorgangsweise mit Vorteil so gewählt wird, daß die Länge des eingeschlagenen, ersten Endes des gefalteten Teigblattes kleiner oder gleich der Länge der eingeschlagenen Teilstücke des gegenüberliegenden Endes ist. Ein mehrfaches Einschlagen der Schmalseite des ursprünglichen Faltproduktes nach dem ersten Faltvorgang läßt sich gleichfalls in besonders einfacher Weise maschinell ausführen, wobei der letzte mehrfache Einschlagvorgang nach Art eines Wickelprozesses mit hoher Geschwindigkeit ausgeführt werden kann, ohne das empfindliche Produkt zu beschädigen.

Um in jedem Fall eine sichere und einfache Trennung der gefalteten Teilbereiche des Teigblattes bei der Verwendung sicherzustellen, wird bevorzugt so vorgegangen, daß die Faltung des Teigblattes unter Zwischenschaltung eines Trennmaterials, insbesondere einer Trennfolie, beispielsweise aus Pergament, Papier od.dgl., erfolgt.

Die erfindungsgemäße Vorrichtung zur Durchführung dieses Verfahrens ist mit einer ersten Fördereinrichtung zum Transport von Teigblättern ausgebildet, wobei an die erste Fördereinrichtung eine erste Faltstation mit um zur Förderrichtung parallele Achsen schwenkbare Faltklappen angeschlossen ist, wobei in Förderrichtung nach der ersten Faltstation eine um eine quer zur Förderrichtung verlaufende Achse schwenkbare Klappe angeordnet ist und wobei an eine zweite Fördereinrichtung über eine Übergabestelle eine Einrichtung zum mehrfachen Einschlagen des freien Endes des gefalteten Teigblattes anschließt. Die erste Faltstation wird hiebei so betrieben, daß die beiden, um zueinander paralle Achsen schwenkbaren Faltklappen konsekutiv betätigt werden, so daß auf einen ersten Faltvorgang mittels einer der beiden Faltklappen nach dem Zurückschwenken dieser Faltklappe der zweite Faltvorgang mittels der zweiten Faltklappe durchgeführt werden kann. Auch der erste Einschlagvorgang des nunmehr in der Regel die Schmalseite des Faltproduktes bildenden, gefaltenen Teigblattes bzw. Faltpaketes kann in einfacher Weise mittels einer schwenkbaren Klappe durchgeführt werden, worauf nach der Übergabestelle in eine weitere Einrichtung ein mehrfaches Einschlagen bzw. Aufwickeln des anderen, freien Endes des gefaltenen Teigblattes vorgenommen wird, um unmittelbar ein gefaltetes Endprodukt zu erzielen. Mit hoher Taktgeschwindigkeit kann eine derartige Einrichtung zum mehrfachen Einschlagen des freien Endes des gefalteten Teigblattes dann betrieben werden, wenn die Ausbildung so getroffen ist, daß diese Einrichtung von Stangen gebildet ist, welche um eine zwischen den Stangen und parallel zu diesen verlaufende Rotationsachse drehbar antreibbar sind. Bei einer derartigen Ausbildung genügt es, die Übergabestelle so auszubilden, daß der mehrfach einzuschlagende Bereich von den rotierenden Stangen erfaßt werden kann, wofür mit Vorteil die Ausbildung so getroffen ist, daß die Übergabestelle der Fördereinrichtung in oder nahe der Drehachse der Stangen angeordnet ist. Das Endprodukt kann in einfacher Weise dadurch freigegeben werden, daß die Stangen in Richtung ihrer Achse abgezogen werden, wodurch unmittelbar das Endprodukt an eine Sammelstelle gelangen kann.

Um eine einwandfreie Faltung des empfindlichen und überaus dünnen Produktes in der ersten Faltstation sicherzustellen, wird die Faltung mit Vorteil bei stillstehender Teigbahn vorgenommen. Zu diesem Zweck ist mit Vorteil die erfindungsgemäße Ausbildung so getroffen, daß im Bereich der ersten Faltstation ein Zwischenförderer angeordnet ist, dessen Antrieb während des Faltvorganges abstellbar ist. Wenn gleichzeitig ein aus mehreren Blättern bestehendes Paket gefaltet werden soll, ist eine Ausbildung besonders vorteilhaft, bei welcher an der Übergabestelle der Fördereinrichtung auf den Zwischenförderer eine Einrichtung zum Erfassen eines Teigblattes angeordnet ist, welche mit die Fördergeschwindigkeit des Förderers übersteigender Geschwindigkeit antreibbar ist. Mit einer derartigen Einrichtung zum Erfassen des Teigblattes kann ein vom Förderer angeliefertes Teigblatt mit die Fördergeschwindigkeit übersteigender Geschwindigkeit abgezogen werden und auf das Teigblatt gefördert werden, welches in der Folge bei stillstehenden Teigblättern in der ersten Faltstation um zueinander parallele Kanten gefaltet wird.

Um ein Haften auf Grund von Unterdruckbildung zwischen den Faltklappen und dem Teigblatt zu vermeiden, ist mit Vorteil im Bereich der ersten Faltstation die Ausbildung so getroffen, daß die Faltklappen der ersten Faltstation Durchbrechungen aufweisen. Eine analoge Ausbildung kann naturgemäß auch für die Faltklappe zum Einschlagen des einen Endes des gefalteten Teigblattes bzw. Paketes gewählt werden, jedoch ist an dieser Stelle mit Rücksicht auf das bereits größere Gewicht des einzuschlagenden Teilbereiches die Gefahr einer Haftung durch Unterdruckbildung zwischen Faltklappe und Teigmaterial bereits wesentlich geringer.

Um das Einschlagen des bereits gefalteten Teigblattes bzw. Teigblattpaketes um eine exakt definierte Kante zu erleichtern, kann mit Vorteil die Ausbildung so getroffen sein, daß nahe der Schwenkachse der Klappe zum Einschlagen des ersten Endes des gefalteten Teigblattes oberhalb der Fördereinrichtung ein Stab quer zur Förderrichtung verschiebbar angeordnet ist. Auch während des ersten Faltvorganges, bei welchem ein oder mehrere Teigblätter um zueinander parallele Faltkanten eingewärts gefaltet werden, läßt sich die Qualität der Faltung verbessern und die Gefahr von Fehlern beim Falten wesentlich verringern, wenn, wie es einer bevorzugten Weiterbildung entspricht, die Ausbildung so getroffen ist, daß im Bereich der ersten Faltstation ein blattförmiges, schwenkbares oder federndes Element oberhalb des Zwischenförderers angeordnet ist, dessen Seitenkanten in der Projektion auf den Zwischenförderer im wesentlichen mit den Anlenkachsen der Faltklappen fluchten.

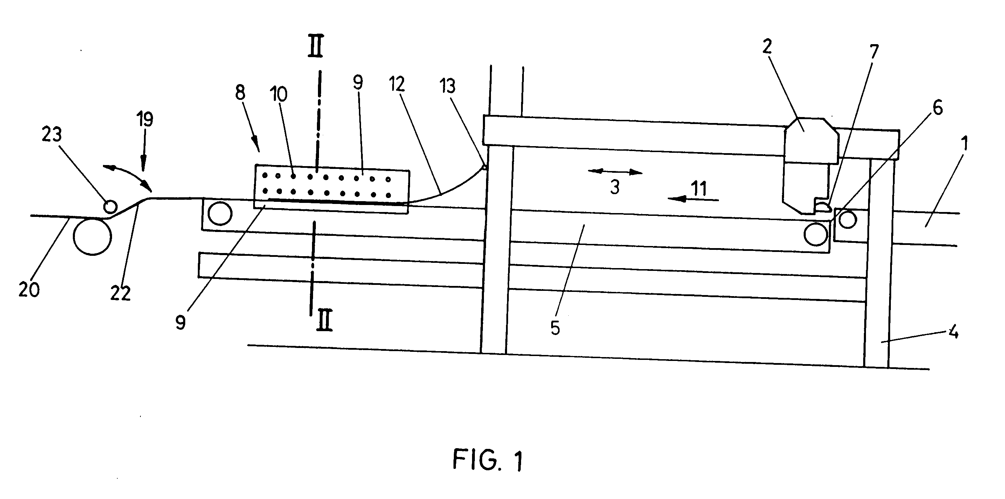

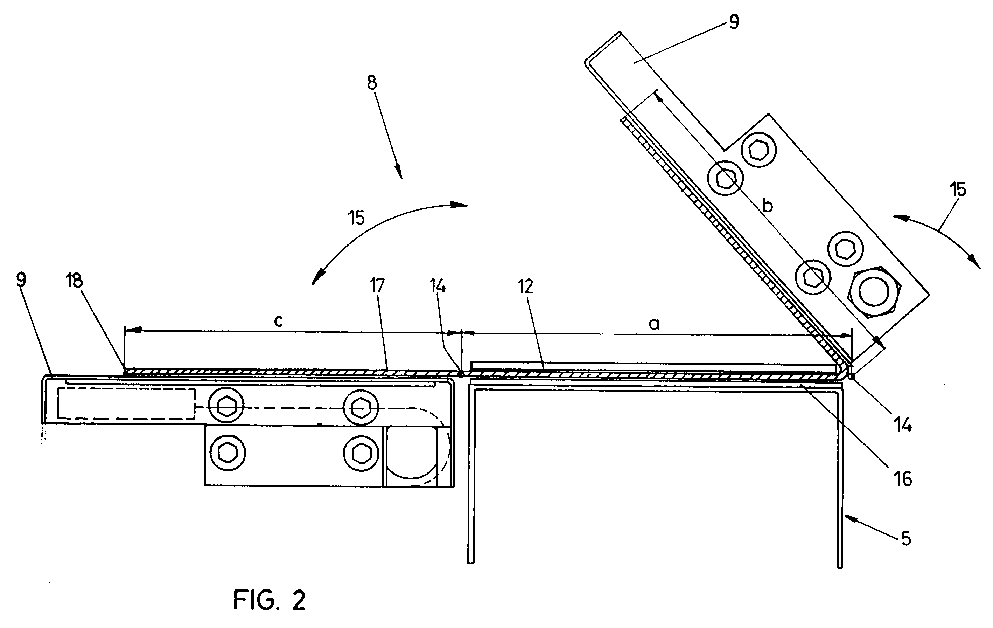

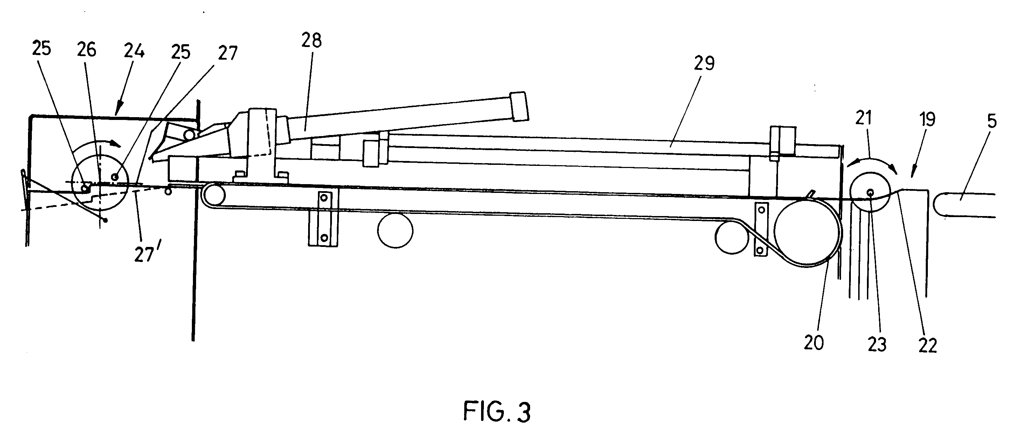

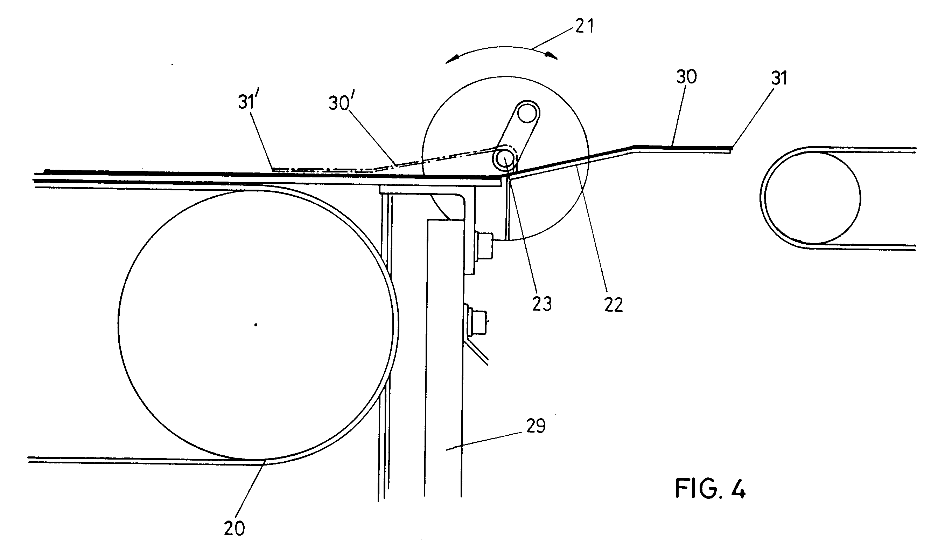

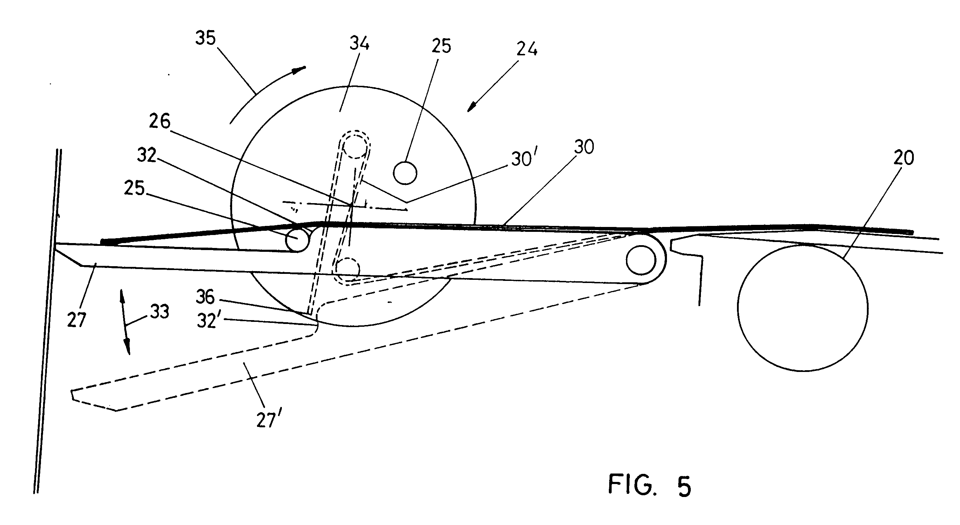

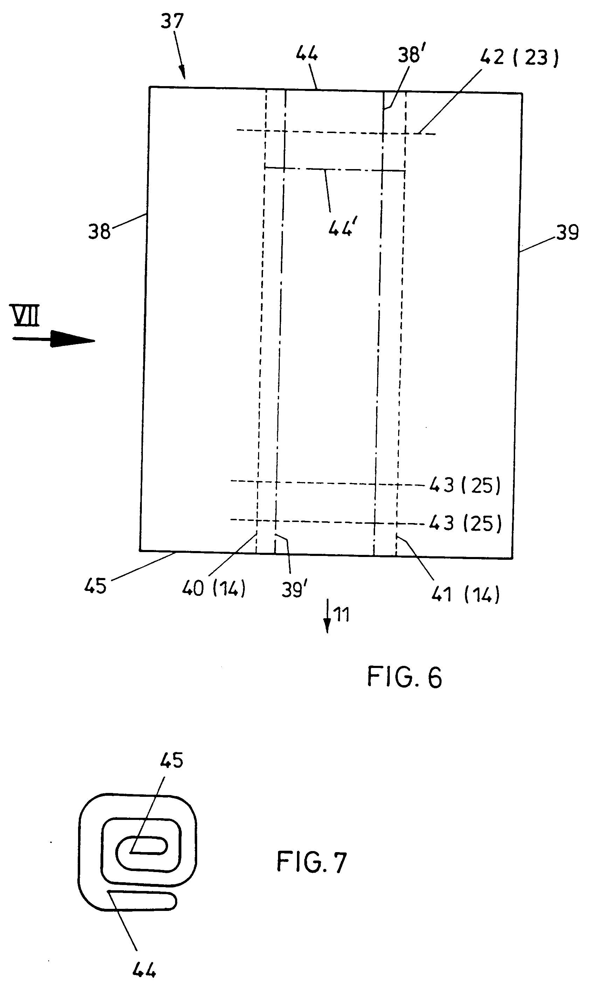

Die Erfindung wird nachfolgend an Hand einer in der Zeichnung schematisch dargestellten Vorrichtung zur Durchführung des erfindungsgemäßen Verfahrens näher erläutert. In dieser zeigen: Fig. 1 eine schematische Ansicht der ersten Faltstation zum Falten eines oder mehrerer Teigblätter um zueinander parallele Faltlinien, wobei dieser ersten Faltstation eine Einrichtung zur Anordnung von mehreren Teigblättern übereinander vorgeschaltet ist; Fig. 2 einen Schnitt nach der Linie II-II der Fig. 1 durch die erste Faltstation in stark vergrößertem Maßstab; Fig. 3 eine Ansicht einer an die erste Faltstation anschließenden Einrichtung zum Einklappen des einen Endes des gefalteten Faltpaketes sowie daran anschlieβend eine Einrichtung zum Einschlagen bzw. Aufwickeln des gefalteten Teigblattes beginnend vom anderen Ende; Fig. 4 in vergrößertem Maßstab im Detail die Einrichtung zum Einklappen des ersten Endes des gefalteten Teigblattes, und Fig. 5 in ebenfalls vergrößerter Darstellung im Detail die Einrichtung zum Einschlagen bzw. Wickeln des anderen Endes des gefalteten Teigblattes, Fig. 6 eine schematische Draufsicht auf ein Teigblatt, wobei die Faltlinien der aufeinanderfolgenden Faltvorgänge angedeutet sind; und Fig. 7 eine Ansicht in Richtung des Pfeiles VII der Fig. 6 auf ein vollkommen gefaltetes Teigblatt bzw. Teigblattpaket.

In Fig. 1 ist mit 1 eine Fördereinrichtung bezeichnet, mit welcher im wesentlichen kontinuierlich auf eine vorgegebene Größe zugeschnittene Teigblätter aus einer nicht näher dargestellten Anlage zum Ziehen und Trocknen des Teiges, insbesondere Strudelteiges, den nachfolgenden Faltstationen zugeführt werden. Im allgemeinen werden derartige Strudelteigblätter nicht einzeln gefaltet, sondern es ist üblicherweise vorgesehen, wenigstens zwei übereinander liegende Strudelteigblätter jeweils zu falten und nachfolgend zu verpacken. Für ein derartiges Anordnen von wenigstens zwei Strudelteigblättern übereinander ist anschließend an die erste Fördereinrichtung 1 eine Einrichtung 2 zum Erfassen eines durch die Fördereinrichtung 1 angelieferten Teigblattes vorgesehen, wobei diese Einrichtung 2 im Sinne des Doppelpfeiles 3 an einem schematisch angedeuteten Rahmen 4, welcher auch als Lagerung für die Fördereinrichtung 1 sowie einen daran anschließenden Zwischenförderer 5 dient, bewegbar ist. Der Antrieb für die Einrichtung 2 ist dabei derart ausgebildet, daß sie mit die Fördergeschwindigkeit der Fördereinrichtung 1 übersteigender Geschwindigkeit bewegbar ist, um sicherzustellen, daß nach einem Ablegen eines ersten Teigblattes auf dem Zwischenförderer 5 die Einrichtung 2 zum Erfassen eines weiteren Teigblattes zu einem Zeitpunkt sich bereits wieder an der Übergabestelle 6 zwischen den Förderern befindet, zu welchem das nächstfolgende Teigblatt von der Fördereinrichtung 1 gefördert wird. Zum Ergreifen der Teigblätter an der abgesetzt ausgebildeten Ubergabestelle 6 ist dabei schematisch ein Greifarm 7 angedeutet. Nachdem derart beispielsweise zwei Teigblätter übereinander angeordnet sind, werden diese durch den abschaltbar ausgebildeten Zwischenförderer 5 in die erste Faltstation 8 übergeführt, in welcher eine erste Faltung und wenigstens zwei zueinander in parallele Faltlinien erfolgt. Die Faltung erfolgt dabei bei dem gezeigten Ausführungsbeispiel mit Hilfe von zwei Faltklappen 9, wie dies in Fig. 2 noch näher dargestellt werden wird. Dabei ist in Fig. 1 eine Faltklappe 9 in einer angehobenen Stellung ohne aufliegendes Teigblatt dargestellt, und es sind deutlich Durchbrechungen bzw. Löcher 10 in der Faltklappe 9 ersichtlich, welche das Auftreten eines Unterdruckes und damit eines teilweisen Anhaftens einer bzw. mehrerer Teigblätter an der Faltklappe 9 beim Falten verhindern. Zur Führung und zur Definierung exakter und im wesentlichen parallel zur Förderrichtung 11 verlaufender Faltkanten ist am Rahmen 4 ein blattförmiges Element 12 festgelegt, welches entweder um die Anlenkstelle 13 in geringem Ausmaß schwenkbar ist oder in Form eines Federelementes ausgebildet ist. Beim Transport der durch die Einrichtung 2 übereinandergestapelten Teigblätter mittels des Zwischenförderers 5 werden diese Teigblätter von dem Element 12 geführt und gehalten, wobei weiters durch das Element 12 exakte Faltlinien definiert werden, wie dies unter Bezugnahme auf Fig. 2 noch näher ersichtlich wird. Für eine ordnungsgemäße Faltung ist der Antrieb des Zwischenförderers 5 im allgemeinen abschaltbar ausgebildet, so daß bei geeigneter Bemessung der Abstände der Einrichtung 2 von der ersten Faltstation im allgemeinen so gearbeitet wird, daß das Anordnen von wenigstens zwei Teigblättern übereinander gleichzeitig mit einer Faltung des vorangehenden Teigblattstapels jeweils bei ruhendem Zwischenförderer erfolgt. Für eine korrekte Lage der Teigblätter in der ersten Faltstation 8 können am Ende der Klappe Anschläge vorgesehen sein. Nach erfolgter Faltung um zueinander paralle Faltlinien gelangt das gefaltete Teigblatt bzw. die gefalteten Teigblätter an einer Ubergabestelle 19 in weiterer Folge in eine schematisch angedeutete Einrichtung 22 zum Einklappen eines ersten Endes des Faltpaketes, wie dies in Fig. 3 und 4 näher dargestellt ist.

Bei dem in Fig. 2 dargestellten Schnitt durch die erste Faltstation sind deutlich die zwei Faltklappen 9 ersichtlich, welche um schematisch mit 14 angedeutete Schwenkachsen in nicht näher dargestellter Weise, beispielsweise über geeignete Hebelmechanismen im Sinne der Pfeile 15 klappbar sind. Dabei ist das auf der mit 16 bezeichneten Förderbahn des Zwischenförderers 5 und den Klappen 9 aufliegende Teigblatt mit 17 angedeutet. Der Einfachheit halber ist dabei das Teigblatt in einem dargestellt, wobei es sich, wie oben erwähnt, auch um zwei oder mehrere übereinander angeordnete Teigblätter handeln kann. Die Lage der Achsen 14, deren Abstand mit a bezeichnet ist, ist dabei derart gewählt, daß die durch die Faltklappen 9 umgeklappten Lappen des Teigblattes 17, deren Breiten mit b und c bezeichnet sind, geringer sind als der die Grundfläche bildende Bereich der Teigbahn. Die Breite b des umgeklappten ersten Lappens kann dabei nahezu gleich der Breite a sein, während die Breite c der Teigbahn so bemessen sein muß, daß die freie Kante 18 innerhalb der Projektion des gefalteten Teigblattes und somit innerhalb der Breite a der Grundfläche zu liegen kommt. Für eine geeignete Definition der Faltlinien ist weiters die Breite des schwenkbaren oder federnden Elementes 12 zur Führung der Teigbahn 17 im wesentlichen gleich oder nur geringfügig kleiner als der Abstand zwischen den Achsen 14 der Faltklappe.

In Fig. 3 ist die Einrichtung zum weiteren Einschlagen bzw. Wickeln des in der ersten Faltstation um wenigstens zwei zueinander parallele Faltlinien gefalteten Teigblattes bzw. Teigblattpaketes näher dargestellt. Dabei erfolgt vom Förderer 5 die Übergabe des gefalteten Teigblattes bzw. Teigblattpaktes an einer Übergabestelle 19 auf eine weitere Fördereinrichtung 20, welche wiederum diskontinuierlich betrieben werden kann. Im Bereich der Übergabestelle 19 ist eine im Sinne des Pfeiles 21 schwenkbare Klappe 22 vorgesehen, mit welcher um einen Dorn bzw. eine Stange 23 ein Einklappen des einen Endes des gefalteten Teigblattpaketes quer zu den Faltlinien der ersten Faltstation erfolgt, wie dies noch genauer in Fig. 4 dargestellt werden wird.

Nach einem derartigen Einschlagen des einen Endes wird über die Fördereinrichtung 20 das Teigblattpaket einer Wickeleinrichtung 24 zugeführt, wobei beginnend von dem dem ersten eingeschlagenen Ende gegenüberliegenden Ende des Teigblattes ein mehrfaches Einschlagen bzw. Wickeln um Stangen 25, welche um eine Achse 26 rotierbar gelagert sind, erfolgt. Die Übergabestelle wird dabei von einem schwenkbaren Tisch bzw. Support 27 gebildet, wie dies in Fig. 5 noch näher erläutert werden wird. Nach einem mindestens zweimaligen Einschlagen bzw. Wickeln im Bereich dieses Endes werden nach einer Vollendung des Wickel- bzw. Einschlagvorganges die Stangen 25 parallel zur Rotationsachse abgezogen, worauf mit Hilfe einer schematisch angedeuteten Abschiebeeinrichtung 28 das gebildete Faltpaket einer nicht näher dargestellten Sammelstelle zugeführt wird. Der Rahmen der Lager- oder Fördereinrichtung 20 sowie der Wickelstation 24 und der Einrichtung zum Einklappen des ersten Endes ist dabei mit 29 angedeutet.

In Fig. 4 ist im Detail die schwenkbare Klappe 22 zum Einschlagen des ersten Endes des gefalteten Teigblattes bzw. Teigblattpaketes, welches nunmehr mit 30 bezeichnet ist, dargestellt. Durch entsprechende und nicht näher dargestellte Sensoren, beispielsweise Lichtschranken, am Rahmen 29 wird das Förderband 20 bei einer geeigneten Lage des Faltpaketes 30 angehalten, und es wird durch ein Hochklappen der Klappe 22 im Sinne des Pfeiles 21 das eine Ende des gefalteten Teigblattes bzw. Teigblattpaketes um die Stange bzw. den Dorn 23 gefaltet, so daß dieses Ende in die strichliert bezeichnete Lage 30′ gelangt. Derart ist sichergestellt, daß die Kante 31 des Faltpaketes wiederum zum Inneren der Grundfläche zu liegen kommt, nachdem in der ersten Faltstation schon dafür Sorge getragen wurde, daß die bei der Faltung mit der zweiten Klappe nach innen geschlagene Kante 18 des Teigblattes innerhalb der Grundfläche liegt. Ebenso wie nach der Faltung in der ersten Faltstation die Außenkanten des Faltpaketes von im Bereich der Schwenkachse 14 gelegenen Faltkanten gebildet werden, wird somit durch das Einschlagen des ersten Ende wiederum dafür Sorge getragen, daß nach außen hin lediglich eine Faltkante und nicht ein freier Rand des Teigblattes sichtbar wird, wobei die Faltkante durch den Dorn 23 definiert wird. Nach einem Einklappen des Teigblattes in die strichliert dargestellte Stellung wird die Stange abgezogen, so daß durch Inbetriebnahme des Förderers 20 das an einem Ende eingeschlagene, gefaltete Teigblattpaket der in Fig. 5 näher dargestellten Wickelvorrichtung 24 zugeführt werden kann.

Vom Förderer 20 erfolgt im Bereich der Wickelstation 24 eine Übergabe des Faltpaketes 30 auf eine in Form eines schwenkbar ausgebildeten Tisches 27 ausgebildete Übergabestelle. Der Tisch ist mit einer Abstufung 32 ausgebildet, deren Kontur im wesentlichen dem Querschnitt einer Stange 25 zum Einschlagen bzw. Wickeln des gefalteten Teigblattes beginnend von dem dem ersten, eingeschlagenen Ende gegenüberliegenden Ende entspricht. Nachdem der Förderer wiederum durch geeignete Sensoren bei entsprechender Lage des Faltpaketes 30 angehalten wurde, wird der Tisch 27 in die mit 27′ bezeichnete Stellung gemäß dem Pfeil 33 abgesenkt und es erfolgt ein Einschlagen bzw. Wickeln des Teigblattpaketes 30 durch Rotation der beispielsweise an einer Scheibe 34 festgelegten Stangen 25 um die Achse 26 im Sinne des Pfeiles 35. Derart gelangt das Teigblatt zunächst in die strichliert mit 30′ angedeutete Stellung, wobei bei einem Wickeln bzw. Einschlagen im Sinne der Fig. 5 das Teigblattpaket 30 wenigstens dreimal umgeschlagen wird, damit das mit 36 bezeichnete freie Ende ebenfalls zum Inneren des Endproduktes zu liegen kommt. Die Länge des mit Hilfe der schwenkbaren Klappe 22 eingeschlagenen, ersten Endes des gefalteten Teigblattes 30 wird derart gewählt, daß sie im wesentlichen den beim Wickeln bzw. Einschlagen des anderen Endes sich ergebenden Abmessungen entspricht. Für handliche Verpackungsgrößen werden dabei im allgemeinen die Längen so bemessen, daß beim Wickelvorgang zwischen fünf und zehn Lagen übereinander zu liegen kommen. Nach Vollendung des Wickel- bzw. Einschlagvorganges werden die Stangen 25 in Richtung der Rotationsachse 26 abgezogen, worauf, wie oben erwähnt, das gebildete Produkt abgeschoben wird. Anstelle eines Abziehens der Stangen 25 kann auch ein Abschieben von den Stangen 25 vorgesehen sein.

In Fig. 6 ist schematisch ein im wesentlichen rechteckiges Teigblatt 37 mit zur mit 11 bezeichneten Bewegungsrichtung parallelen Seitenkanten 38 und 39 dargestellt. In der ersten Faltstation wird dabei eine erste Faltung des von der Seitenkante 38 begrenzten Abschnittes um eine strichliert angedeutete Faltlinie 40 vorgenommen, welche im wesentlichen von der in Fig. 2 dargestellten Achse 14 der ersten Faltklappe 9 definiert wird. Nach diesem ersten Faltvorgang gelangt die Seitenkante 38 in die strichpunktiert angedeutete Lage. Nachfolgend wird ebenfalls in der ersten, in Fig. 2 näher dargestellten Faltstation der durch die Seitenkante 39 begrenzte Bereich um eine zweite, zur ersten Faltlinie 40 parallele Faltlinie 41 umgeschlagen, wobei auch diese Faltlinie 41 wiederum durch die Anlenkachse 14 der zweiten Faltklappe bei Betrachtung der Fig. 2 definiert wird; die Seitenkante 39 gelangt nach dieser zweiten Faltung in die mit 39′ strichpunktiert dargestellte Position und es ergibt sich nach diesen ersten zwei Faltvorgängen ein auf etwa ein Drittel seiner ursprünglichen Breite gefaltetes Teigblatt 37, welches in Bewegungsrichtung 11 gesehen nunmehr von den Faltlinien 40 und 41 begrenzt ist. Aus Fig. 6 ergibt sich deutlich, daß die ursprünglich außenliegenden Seitenkanten 38 und 39 innerhalb der Projektion des gefalteten Teigblattes innerhalb der von den Faltlinien 40 und 41 begrenzten Außenkontur zu liegen kommen.

Nach Verlassen der ersten Faltstation gelangt das gefaltete Teigpaket in den Bereich der in Fig. 4 näher dargestellten schwenkbaren Klappe 22 und es erfolgt ein Einschlagen des in Bewegungsrichtung 11 gesehenen hinteren Endes 44 um die strichliert angedeutete Faltlinie 42, welche durch den Dorn 23 definiert wird. Nach Falten mit Hilfe der Klappe 22 gelangt das freie Ende 44 in die strichpunktiert mit 44′ angedeutete Position.

In weiterer Folge wird das Teigblatt zu der in Fig. 5 näher dargestellten Wickel- bzw. Einschlageinrichtung übergeführt, wobei die durch die Dorne 25 definierten Faltlinien mit 43 strichliert angedeutet sind. Durch die durch die Drehung der Dorne 25 erfolgende Wickelbewegung, wie dies oben beschrieben wurde, gelangt nunmehr auch das letzte außenliegende freie Ende 45 innerhalb der Projektion des gefalteten Teigblattes, wie dies deutlich in der Ansicht gemäß Fig. 7 dargestellt ist. Dabei ist es wichtig, daß das durch die freie Kante 45 definierte Ende wenigstens zweimal eingeschlagen wurde, so daß die Kante 45 über dem eingeschlagenen ersten Ende 44 zu liegen kommt. In der schematischen Darstellung gemäß Fig. 7 bezeichnet die durchgehende Linie dabei jeweils die gedachte Mittellinie durch das bereits zuvor um die Faltlinien 40 und 41 gefaltete Teigblatt.

Wie oben erwähnt, kann ein aus zwei oder mehreren übereinander liegenden Teigblättern bestehendes Teigblattstapel bzw. Teigblattpaket in der dargestellten Weise gefaltet werden, wobei sich bei übereinanderliegenden Teigblättern keine Unterschiede zur soeben beschriebenen Vorgangsweise gemäß der Darstellung der Fig. 6 ergeben.

## Patentansprüche

1. Verfahren zum Falten von im wesentlichen rechteckigen Teigblättern (37), wobei wenigstens ein Teigblatt (37) in wenigstens zwei aufeinanderfolgenden Faltvorgängen um zueinander parallele Faltlinien (40,41) gegensinnig einwärts gefaltet wird, wobei die zur Faltlinie (40,41) parallelen freien Kanten (38,39) des Teigblattes (37) innerhalb der Projektion des gefalteten Teigblattes zu liegen kommen, wobei das einwärts gefaltete Teigblatt (37) um quer zu den parallelen Faltlinien (40,41) verlaufende Linien (42) an den Enden eingeschlagen wird, dadurch gekennzeichnet, daß das gefaltete Teigblatt ausgehend vom in Richtung der zueinander parallelen Faltlinien (40,41) dem ersten Ende gegenüberliegenden, anderen Ende des gefalteten Teigblattes (37) entgegen der Richtung des ersten Einschlages wenigstens zweimal so eingeschlagen wird, daß eine Faltkante (43) des wenigstens zweifach eingeschlagenen Produktes über dem eingeschlagenen, ersten Ende zu liegen kommt.

2. Verfahren nach Anspruch 1, dadurch gekennzeichnet, daß das Teigblatt (37) um zwei zueinander parallele Faltlinien (40,41) zum mittleren Abschnitt hin gegensinnig gefaltet wird.

3. Verfahren nach Anspruch 1 oder 2, dadurch gekennzeichnet, daß die zueinander parallelen Faltlinien (40,41) in einem Abstand voneinander liegen, welcher größer oder gleich dem Abstand der Faltlinien (40,41) von den zur Faltlinie parallelen freien Kanten (38,39) des Teigblattes (37) ist.

4. Verfahren nach Anspruch 1, 2 oder 3, dadurch gekennzeichnet, daß die Länge des eingeschlagenen ersten Endes (44) des gefalteten Teigblattes (37) kleiner oder gleich der Länge der eingeschlagenen Teilstücke des gegenüberliegenden Endes (45) ist.

5. Verfahren nach einem der Ansprüche 1 bis 4, dadurch gekennzeichnet, daß die Faltung des Teigblattes (37) unter Zwischenschaltung eines Trennmaterials, insbesondere einer Trennfolie, beispielsweise aus Pergament, Papier od.dgl., erfolgt.

6. Vorrichtung zur Durchführung des Verfahrens nach einem der Ansprüche 1 bis 5 mit einer ersten Fördereinrichtung (1) zum Transport von Teigblättern (17,37), wobei an die erste Fördereinrichtung (1) eine erste Faltstation (8) mit um zur Förderrichtung (11) parallele Achsen (14) schwenkbare Faltklappen (9) angeschlossen ist, wobei in Förderrichtung (11) nach der ersten Faltstation (8) eine um eine quer zur Förderrichtung (11) verlaufende Achse schwenkbare Klappe (22) angeordnet ist und wobei an eine zweite Fördereinrichtung (20) über eine Übergabestelle eine Einrichtung (24) zum mehrfachen Einschlagen des freien Endes des gefalteten Teigblattes anschließt.

7. Vorrichtung nach Anspruch 6, dadurch gekennzeichnet, daß die Einrichtung (24) zum mehrfachen Einschlagen des freien Endes des gefalteten Teigblattes von Stangen (25) gebildet ist, welche um eine zwischen den Stangen (25) und parallel zu diesen verlaufende Rotationsachse (26) drehbar antreibbar sind.

8. Vorrichtung nach Anspruch 6 oder 7, dadurch gekennzeichnet, daß die Übergabestelle der Fördereinrichtung (20) in oder nahe der Drehachse der Stangen (25) angeordnet ist.

9. Vorrichtung nach Anspruch 6, 7 oder 8, dadurch gekennzeichnet, daß im Bereich der ersten Faltstation (8) ein Zwischenförderer (5) angeordnet ist, dessen Antrieb während des Faltvorganges abstellbar ist.

10. Vorrichtung nach einem der Ansprüche 6 bis 9, dadurch gekennzeichnet, daß an der Übergabestelle (6) der Fördereinrichtung (1) auf den Zwischenförderer (5) eine Einrichtung (7) zum Erfassen eines Teigblattes angeordnet ist, welche mit die Fördergeschwindigkeit des Förderers (5) übersteigender Geschwindigkeit antreibbar ist.

11. Vorrichtung nach einem der Ansprüche 6 bis 10, dadurch gekennzeichnet, daß die Faltklappen (9) der ersten Faltstation (8) Durchbrechungen (10) aufweisen.

12. Vorrichtung nach einem der Ansprüche 6 bis 11, dadurch gekennzeichnet, daß nahe der Schwenkachse der Klappe (22) zum Einschlagen des ersten Endes des gefalteten Teigblattes (30) oberhalb der Fördereinrichtung ein Stab (23) quer zur Förderrichtung (11) verschiebbar angeordnet ist.

13. Vorrichtung nach einem der Ansprüche 6 bis 12, dadurch gekennzeichnet, daß im Bereich der ersten Faltstation (8) ein blattförmiges, schwenkbares oder federndes Element (12) oberhalb des Zwischenförderers (5) angeordnet ist, dessen Seitenkanten in der Projektion auf den Zwischenförderer (5) im wesentlichen mit den Anlenkachsen (14) der Faltklappen (9) fluchten.

## Claims

1. A method of folding strips of dough (37), especially substantially rectangular strudel paste strips, wherein at least one dough strip (37) is folded inwordly in opposite directions about two fold lines (40, 41) parallel to one another in at least two successive folding operations, whereby the free edges (38, 39) of the dough strip (37) parallel to the fold lines (40, 41) come to lie within the projection of the folded dough strip, characterized in that the inwardly folded dough strip (37) is folded in at a first end about a line (42) running transverse to the parallel fold lines (40, 41) and is so folded in at least twice, in the opposite direction to the first folding in, at the other end of the folded dough strip (37) which lies opposite, regarded in the direction of the fold lines (40, 41) parallel to one another, in such a way that a fold edge (43) of the product folded in at least twice comes to lie over the folded in first end.

2. A method according to claim 1, characterized in that the dough strip (37) is oppositely folded over the central section about two fold lines (40, 41) parallel to one another.

3. A method according to claim 1 or 2, characterized in that the fold lines (40, 41) parallel to one another are at a spacing from one another which is greater than or equal to the spacing of the fold lines (40, 41) from edges (38, 39) of the dough strip (37) parallel to the fold lines.

4. A method according to claim 1, 2 or 3, characterized in that the length of the folded in first end (44) of the folded dough strip (37) is smaller than or equal to the length of the folded in portion of the opposite end (45).

5. A method according to any one of claims 1 to 4, characterized in that the folding of the dough strip (37) is effected with the insertion of a separating material, especially a separating film, for example of parchment, paper, or the like.

6. A device for carrying out the method according to any one of claims 1 to 5, with a conveyor device (1) for transporting dough strips (17, 37), characterized in that a first folding station (8) with folding flaps (9) pivoting about axes parallel to the conveying direction (11) adjoins the conveyor device (1), in that, following the first folding station (8) in the conveying direction (11), there is arranged a flap (22) pivoting about an axis running transverse to the conveying direction (11), and in that the conveyor device (20) comprises a transfer station to a device (24) for multiple folding in of the free end of the folded dough strip.

7. A device according to claim 6, characterized in that the device (24) for multiple folding in of the free end of the folded dough strip is formed from rods (25) which are drivable in rotation about an axis of rotation (26) running between the rods (25) and parallel thereto.

8. A device according to claim 6 or 7, characterized in that the transfer station of the conveyor device (20) is arranged in or near to the axis of rotation of the rods (25).

9. A device according to claim 6, 7 or 8, characterized in that an intermediate conveyor (5) is arranged in the region of the first folding station (8), the drive of the intermediate conveyor being capable of being turned off during the folding operation.

10. A device according to any one of claims 6 to 9, characterized in that, at the transfer station (6) from the conveyor device (1) to the intermediate conveyor (5) there is arranged a device (7) for engaging a dough strip and which is drivable with a speed exceeding the conveying speed of the conveyor (5).

11. A device according to any one of claims 6 to 10, characterized in that the folding flaps (9) of the first folding station (8) have apertures (10).

12. A device according to any one of claims 6 to 11, characterized in that a rod (23) is arranged movably transverse to the conveying direction (11) near to the pivotal axis of the flap (22) of folding in the first end of the folded dough strip (30), above the conveyor device.

13. A device according to any one of claims 6 to 12, characterized in that a pivoted or sprung laminar element (12) is arranged in the region of the first folding station (8), above the intermediate conveyor (5), the side edges of this element projected on to the intermediate conveyor (5) being aligned substantially with the hinge axes (14) of the folding flaps (9).

## Revendications

1. Procédé pour plier des feuilles de pâte (37) sensiblement rectangulaires, au moins une feuille de pâte (37) étant repliée vers l'intérieur dans deux sens inverses l'un de l'autre, autour de lignes de pliage(40,41) parallèles entre elles, en au moins deux opérations de pliage successives, les bords libres (38, 39) de la feuille de pâte (37) qui sont parallèles à la ligne de pliage (40, 41) venant se placer dans les limites de la projection de la feuille de pâte pliée, la feuille de pâte 37 repliée vers l'intérieur étant rabattue sur elle-même aux extrémités, autour des lignes (42) s'étendant transversalement aux lignes de pliage parallèles (40, 41), caractérisé en ce que la feuille de pâte pliée, est rabattue sur elle-même au moins deux fois en sens inverse du premier rabattement en partant de l'autre extrémité de la feuille de pâte pliée (37), qui est à l'opposé de la première extrémité selon la direction parallèle aux lignes de pliage (40, 41), parallèles de telle manière qu'un bord plié (43) du produit rabattu au moins deux fois sur lui-même vienne se placer par dessus la première extrémité rabattue.

2. Procédé selon la revendication 1, caractérisé en ce que la feuille de pâte (37) est repliée vers le segment central autour de deux lignes de pliage (40, 41) parallèles entre elles dans deux sens inverses l'un de l'autre.

3. Procédé selon la revendication 1 ou 2, caractérisé en ce que les lignes de pliage (40, 41) parallèles entre elles se trouvent à un écartement mutuel qui est supérieur ou égal à la distance séparant les lignes de pliage (40, 41) des bords libres (38, 39) de la feuille de pâte (37) qui sont parallèles à la ligne de pliage.

4. Procédé selon la revendication 1, 2 ou 3, caractérisé en ce que la longueur de la première extrémité rabattue sur elle-même (44) de la feuille de pâte (37) pliée est inférieure ou égale à la longueur des morceaux partiels de l'extrémité opposée (45) qui sont rabattus sur eux-mêmes.

5. Procédé selon une des revendications 1 à 4, caractérisé en ce que le pliage de la feuille de pâte (37) s'effectue avec interposition d'une matière séparatrice, notamment d'une feuille séparatrice, en particulier d'une feuille de papier sulfurisé, papier ou équivalent.

6. Dispositif pour la mise en oeuvre du procédé selon une des revendications 1 à 5, comprenant un premier dispositif transporteur (1) servant au transport de feuilles de pâte (17, 37), caractérisé en ce que au premier dispositif transporteur (1) fait suite un premier poste de pliage (8) possédant des volets de pliage (9) qu'on peut faire pivoter autour d'axes (14) parallèles à la direction de transport (11), cependant qu'en aval du premier poste de pliage (8) dans la direction de transport (11) est disposé un volet (22) qu'on peut faire pivoter autour d'un axe s'étendant transversalement à la direction de transport (11), et qu'à un deuxième dispositif transporteur (20) fait suite, avec interposition d'un poste de transfert, un dispositif (24) servant à rabattre plusieurs fois sur elle-même l'extrémité libre de la feuille de pâte pliée.

7. Dispositif selon la revendication 6, caractérisé en ce que le dispositif (24) servant à rabattre plusieurs fois sur elle-même l'extrémité libre de la feuille de pâte pliée est formé de tringles (25) qui peuvent être entraînées en rotation autour d'un axe de rotation (26) qui s'étend entre les tringles (25) et parallèlement à celles-ci.

8. Dispositif selon la revendication 6 ou 7, caractérisé en ce que la zone de transfert du dispositif transporteur (20) est disposée sur l'axe de rotation des tringles (25) ou à proximité de cet axe.

9. Dispositif selon la revendication 6, 7 ou 8, caractérisé en ce que, dans la région du premier poste de pliage (8), est agencé un transporteur intermédiaire (5) dont l'entraînement peut être arrêté pendant l'opération de pliage.

10. Dispositif selon une quelconque des revendications 6 à 9, caractérisé en ce que, dans la zone de transfert (6) du dispositif transporteur (1) est disposé, sur un transporteur intermédiaire (5) un dispositif (7) servant à saisir une feuille de pâte, qui peut être entraîné avec une vitesse qui excède la vitesse de transport du transporteur (5).

11. Dispositif selon une des revendications 6 à 10, caractérisé en ce que les volets de pliage (9) du premier poste de pliage (8) présentent des ouvertures (10).

12. Dispositif selon une des revendications 6 à 11, caractérisé en ce qu'il est prévu à proximité de l'axe de pivotement du volet (22), servant à rabattre sur elle-même la première extrémité de la feuille de pâte pliée (30), et au-dessus du dispositif transporteur une barre (23), mobile en translation transversalement à la direction de transport (11).

13. Dispositif selon une des revendications 6 à 12, caractérisé en ce qu'il est prévu dans la région du premier poste de pliage (8), au-dessus du transporteur intermédiaire (5), un élément (12) en forme de feuille, pivotant ou élastique, dont les bords latéraux sont sensiblement dans l'alignement des axes d'articulation (14) des volets de pliage (9), en projection sur le transporteur intermédiaire (5).
